# EUROPÄISCHE PATENTSCHRIFT

(11) **EP 1 013 547 B1**
(45) Veröffentlichungstag und Bekanntmachung des Hinweises auf die Patenterteilung: **04.08.2004**
(21) Anmeldenummer: 99120595.6
(22) Anmeldetag: 16.10.1999
(51) Int. Cl.: B64G 1/22, B29C 53/58, F16C 7/00, E04C 3/29, E04C 3/36, F16S 3/00

(54) **Zugstab oder Druckstab als Bauelement für Raumfahrtstrukturen**
Tension or compression rod as construction element for space structures
Tige de tension ou pression comme élément constructif de structures spatiales

(30) Priorität: 21.12.1998 DE 19859212
(43) Veröffentlichungstag der Anmeldung: 28.06.2000
(73) Patentinhaber: EADS SPACE Transportation GmbH, 28199 Bremen (DE)
(72) Erfinder: Helwig, Gunter, Dr., 88718 Daisendorf (DE); Sippel, Rudolf, 88677 Markdorf (DE); Strobel, Frank, 88690 Uhldingen-Mühlhofen (DE); Zankl, Wolfgang, 88048 Friedrichshafen (DE)
(74) Vertreter: Meel, Thomas

(56) Entgegenhaltungen:
- DE-A- 4 135 695
- DE-U- 8 324 715
- GB-A- 2 054 083
- US-A- 3 850 722
- US-A- 4 353 268
- US-A- 5 288 109
- PATENT ABSTRACTS OF JAPAN vol. 1995, no. 09, 31. Oktober 1995 (1995-10-31) & JP 07 166648 A (TORAY IND INC;OTHERS: 01), 27. Juni 1995 (1995-06-27)

## Beschreibung

Die Erfindung betrifft Leichtbau Streben aus Al/CFK für Raumfahrtstrukturen im Anwendungsbereich von plus 50°C bis minus 250°C bei hohen Zug- oder Drucklasten.

Die Japanische Offenlegungsschrift JP-07-166648 stellt ein Streben aus Al/CFK vor.

Aufgabe der Erfindung ist es
- die Einschnürung des CFK-Rohres am Al-Fitting bei Abkühlung auf bis zu minus 250°C zu minimieren,
- ein Bauteil zu schaffen, das hohe axiale Thermalspannung zwischen Aluminium und CFK bei Temperaturen von plus 50°C bis minus 250°C erträgt und
- ein frühzeitiges Beulen des CFK-Rohres durch wellige Oberflächen bei gewickeltem CFK-Rohr vermeidet.

Diese Aufgabe wird erfindungsgemäß durch den Hauptanspruch gelöst, der Unteranspruch betrifft eine vorteilhafte Ausgestaltung der Erfindung.

Durch den erfindungsgemäßen Lagenaufbau erfolgt eine Anpassung des thermalen Ausdehnungskoeffizienten des CFK-Rohres in Umfangsrichtung an das Aluminium des Fittings.

### Vorteile und Merkmale:

- Entkopplung der axialen thermischen Last von plus 50°C bis minus 250°C durch getrennte Nietreihen in CFK und Aluminium in Verbindung mit aufgeklebten CFK-Verstärkungen an den Rohrenden.
- Erzeugung einer glatten Oberfläche, innen und außen, durch die Verwendung starrer Formwerkzeuge und Vakuumfolien innen und außen. Der äußere Durchmesser des Kunststoffwickelkerns ist so gewählt, daß er zusammen mit der Laminatdicke und dem Setzweg den äußeren Rohrdurchmesser ergibt.
- Die fertigungstechnisch notwendige Umfangszunahme der 90°-Lagen zur Kompensation der Ausdehnung des Kunststoffwickelkerns beim Aushärten wird durch welliges Ablegen der 90°-Lagen mit Winkelabweichungen von ± 5° gewährleistet.
- Eine glatte Oberfläche auf der Innenseite des Rohres wird durch die Verwendung des Kunststoffkerns und dessen Ausdehnung beim Härten bis auf Bauteilmaß erreicht.
- Die ordnungsgemäße Aushärtung selbst wird durch die Vakuumfolie sichergestellt.
- Durch die thermale Entkopplung ist es möglich, billigere und leichtere Al-Fittings im Gegensatz zu Titan Fittings, die wegen ihrer geringen Thermaldehnung eigentlich geeigneter wären, zu verwenden.

Die Erfindung wird nachfolgend anhand von Fig. näher erläutert. Es zeigen:
- Fig. 1:: die Fertigung eines CFK-Rohres
- Fig. 2:: CFK-Streben
- Fig. 3:: Krafteinleitung CFK-Strebe

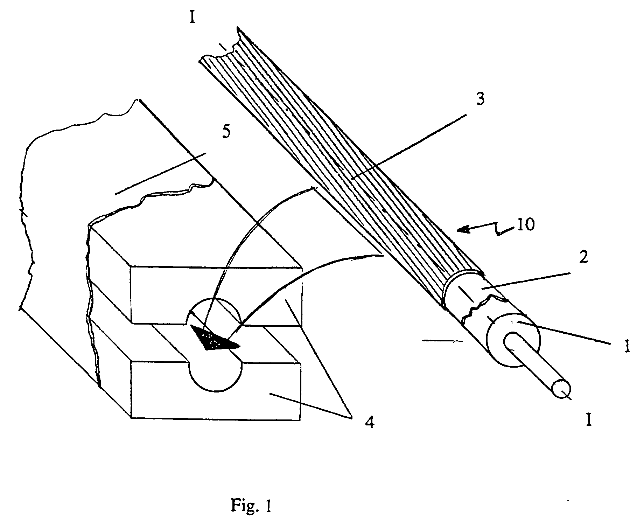

Ein CFK-Rohr 10 (Fig. 1) wird kreuzungsfrei 3 auf einem expandierbaren Kunststoffkern 1, der mit einer Vakuumfolie 2 versehen ist, gewickelt.

Es werden zunächst mehrere Lagen unter einem Winkel von + 5° bezogen auf die Längsachse I - I des Kerns übereinander gewickelt; dann wird die gleiche Anzahl Lagen unter einem Winkel von - 5° bezogen auf die Längsachse I - I des Kerns gewickelt. Die Wandstärke (Dicke) dieser beiden Lagen unter einem Winkel von ± 5° beträgt 48,5 % bezogen auf die Wandstärke (Dicke) des fertigen Rohres.
Nun wird mindestens eine Lage unter einem Winkel von 90° bezogen auf die Längsachse I - I des Rohres gewickelt, deren Wandstärke 3 % bezogen auf die Wandstärke des fertig gewickelten Rohres ausmacht.
Schließlich werden symmetrisch zum oben angegebenen Lagenaufbau eine Anzahl Lagen unter einem Winkel von - 5° und die gleiche Anzahl Lagen unter einem Winkel von + 5° übereinander gewickelt, wobei die Wandstärke dieser letztgenannten Lagen 48,5 % des fertig gewickelten Rohres ausmacht. Der Lagenaufbau ist im Patentanspruch 1 verkürzt wiedergegeben. Die verkürzte Fassung ist dem Fachmann der CFK-Wickeltechnik verständlich.

Nach dem Wickeln aller CFK-Lagen auf den Kunststoffwickelkern 1 wird er in die beiden Formhälften 4 placiert. Die Formhälften 4 werden geschlossen und mit einer Vakuumfolie 5 eingeschlagen, die dann gegen die Vakuumfolie 2 abgedichtet wird. Anschließend wird zum Aushärten unter Druck und Temperatur alles in einen Autoklaven eingebracht. Hierbei expandiert der Kunststoffwickelkern 1 und preßt die CFK-Lagen für eine glatte Oberfläche innen und außen gegen die geschlossenen Formhälften 4, wobei der Autoklavdruck unterstützend wirkt und zusammen mit dem angelegten Vakuum für ein blasenfreies Laminat sorgt.

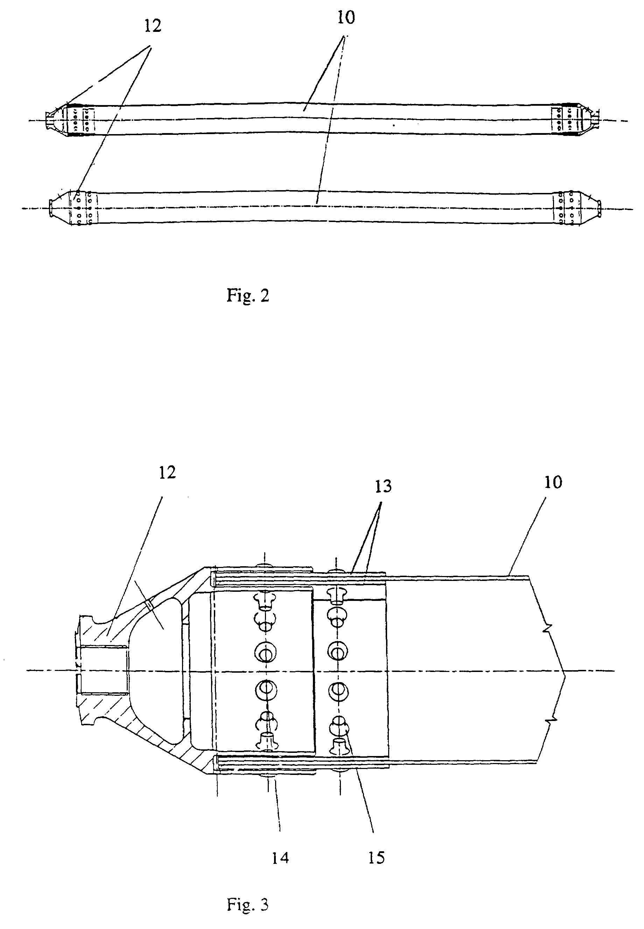

Nach dem Aushärten wird das CFK-Rohr 10 zur Kraftaufnahme an den Rohrenden verstärkt und mit Al-Fittings 12 für die fertige CFK-Strebe (Fig. 2) versehen.

Fig. 3 zeigt Details der Krafteinleitung an den CFK-Rohrenden. Auf das CFK-Rohr 10 werden an den beiden Enden CFK-Verstärkungen 13 innen und außen aufgeklebt. Sie dienen zur erhöhten Lastaufnahme wegen der nur einreihigen Nietung 14, die zur Thermalspannungsentkopplung zwischen CFK und dem Aluminium-Fitting 12 notwendig ist. Die CFK-Verstärkungen werden durch eine Nietreihe 15 am frühzeitigen Abschälen durch Versagung der Klebung unter Last gehindert.

## Patentansprüche

1. Zug- oder Druckstab als Bauelement für Raumfahrtstrukturen mit einem Rohr (10) aus CFK und einem Fitting (12) aus Al, **gekennzeichnet durch** einen Lagenaufbau des Rohres (10):
| | |
|---|---|
| ± 5° | 48,5 % |
| 90° | 3,0 % |
| ± 5° | 48,5 % |
mit kreuzungsfrei gewickelten Lagen, wobei innerhalb einer Lage sämtliche Fasern parallel liegen.

2. Zug- oder Druckstab nach Anspruch 1, **gekennzeichnet durch**:
- in die Rohrenden eingeklebte und auf die Rohrenden aufgeklebte Verstärkungen (13) aus CFK
- eine umlaufende Nut im Fitting (12) zur Aufnahme des Rohrendes und eines Teilbereiches der Verstärkungen (13)
- eine Nietreihe (15) für Verstärkungen und Rohr außerhalb des Fittings (12) und
- eine Nietreihe (14) im Bereich des Fittings (12), die Fitting (12), Verstärkungen (13) und Rohrende fixiert.

## Claims

1. Tension or compression rod as a construction element for space structures with a tube (10) made of CRP and a fitting (12) made of Al, **characterized by** a layered structure of the tube (10) :
| | |
|---|---|
| ± 5° | 48.5% |
| 90° | 3.0% |
| ± 5° | 48.5% |
with layers wound without crossing, all the fibres within a layer lying parallel.

2. Tension or compression rod according to Claim 1, **characterized by**:
- reinforcements (13) made of CRP adhesively embedded in the tube ends and adhesively attached to the tube ends
- a peripheral groove in the fitting (12) for receiving the tube end and a partial region of the reinforcements (13)
- a row of rivets (15) for reinforcements and the tube outside the fitting (12) and
- a row of rivets (14) in the region of the fitting (12), which fixes the fitting (12), reinforcements (13) and the end of the tube.

## Revendications

1. Tige de tension ou de pression comme élément constructif de structures spatiales, avec un tube (10) en CFK et un raccord (12) en Al, **caractérisée par** une structure de couches du tube (10) :
| | |
|---|---|
| ± 5° | 48,5 % |
| 90° | 3,0 % |
| ± 5° | 48,5 % |
avec des couches bobinées sans croisements, dans laquelle toutes les fibres sont parallèles à l'intérieur d'une couche.

2. Tige de tension ou de pression selon la revendication 1, **caractérisée par**:
- des renforts (13) en CFK collés dans les extrémités du tube ou collés sur les extrémités du tube;
- une rainure périphérique dans le raccord (12) destinée à recevoir l'extrémité du tube et une région partielle des renforts (13);
- une rangée de rivets (15) pour des renforts et le tube à l'extérieur du raccord (12); et
- une rangée de rivets (14) dans la région du raccord (12), qui fixe le raccord (12), les renforts (13) et l'extrémité du tube.
